# DEMANDE DE BREVET EUROPEEN

(11) **EP 0 738 812 A1**
(43) Date de publication de la demande: **23.10.1996**
(21) Numéro de dépôt: 96400820.5
(22) Date de dépôt: 17.04.1996
(51) Int. Cl.: E05B 49/00, B60R 25/04

(54) **Système de sécurité à clé et serrure, notamment pour véhicule automobile**

(30) Priorité: 18.04.1995 FR 9504708
(71) Demandeur: VALEO ELECTRONIQUE, 94042 Creteil Cédex (FR)
(72) Inventeur: Rydel, Charles, 75019 Paris (FR)
(74) Mandataire: Gamonal, Didier

(57) **Abrégé**

La présente invention concerne un système de sécurité à clé et serrure, notamment pour véhicule automobile dans lequel la clé remplit à la fois une fonction de déverrouillage des antivols mécaniques, une fonction de télécommande pour l'ouverture à distance des ouvrants et une fonction d'identification électronique pour le déverrouillage des moyens d'immobilisation électronique du véhicule. Selon l'invention une liaison électrique physique entre un circuit électronique (19) logé dans la tête de clé (13) et une centrale d'antivol est fermée lorsque la clé est présente dans la serrure et que le rotor de ladite serrure est dans une position angulaire prédéterminée, une transmission bidirectionnelle de données et/ou d'énergie étant réalisée par l'intermédiaire de ladite liaison pour réaliser la fonction d'identification.

## Description

La présente invention concerne un système de sécurité à clé et serrure, notamment pour véhicule automobile.

Elle trouve application dans le domaine de la commande du déverrouillage des ouvrants et des immobiliseurs d'antivol pour véhicule automobile.

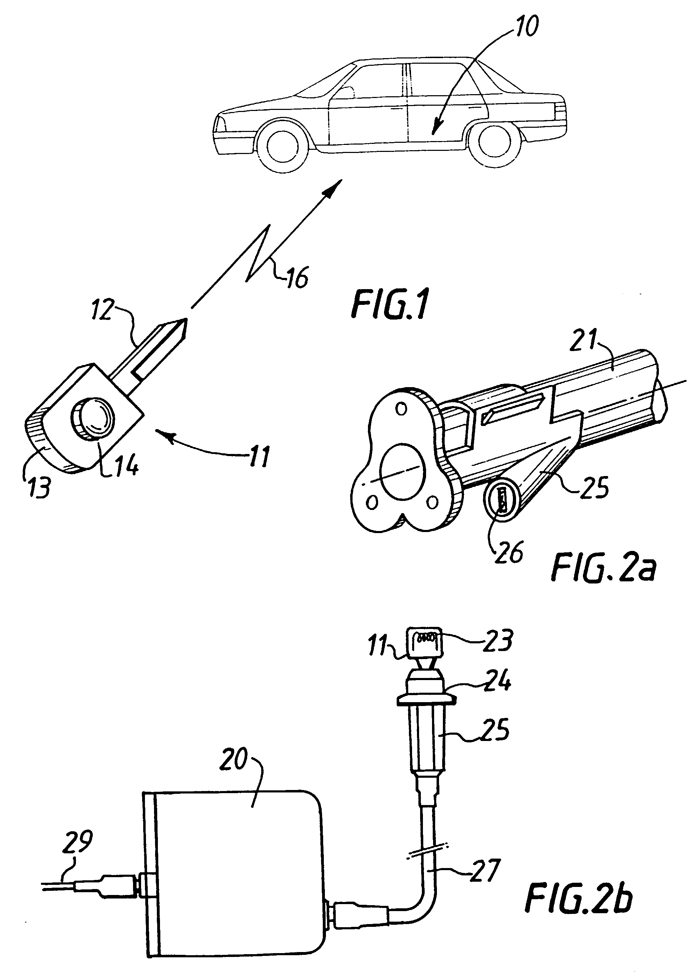

Dans l'art antérieur, il est connu d'utiliser des clés de contact remplissant conjointement une fonction mécanique et une fonction électronique. Ainsi qu'il est visible à la figure 1, de telles clés 11 comportent classiquement un insert 12 portant des dentures ou encoches, et un boîtier ou tête de clé 13.

Les dentures sont destinées à coopérer avec les paillettes d'une serrure telle qu'un interrupteur d'antivol 25, représenté à la figure 2a en liaison avec une colonne de direction 21, pour permettre la libération d'un rotor 26. Dans une première position angulaire du rotor 26, on réalise le déverrouillage de l'antivol de direction et, dans d'autres positions angulaires du rotor 26, on active différents groupes d'accessoires électriques pour, in fine, permettre le démarrage du véhicule. La clé remplit donc une fonction mécanique, qui est une fonction de déverrouillage des antivols mécaniques du véhicule.

De plus, un dispositif électronique est logé dans la tête de clé 13, et est associé à des moyens émetteurs pour émettre un signal 16 de déverrouillage des ouvrants (portières, toit ouvrant, trappe de remplissage de carburant, etc.) du véhicule 10 lors d'une phase d'accès au véhicule. L'utilisateur doit à cet effet appuyer sur une touche 14 de la tête de clé 13. Le signal 16 de déverrouillage est en général un signal codé, porté par une onde radiofréquence ou une onde infrarouge. Ainsi la clé remplit aussi une fonction de télécommande pour l'ouverture des ouvrants du véhicule.

Il est à noter que les dentures de la clé sont aussi, d'une manière connue en soi, utilisées en combinaison avec les paillettes de serrures de portières pour l'ouverture des ouvrants en mode dégradé, c'est à dire lorsque la clé n'est plus apte à remplir sa fonction de télécommande du fait par exemple de la décharge complète de la pile constituant son moyen d'alimentation autonome.

Depuis l'apparition de dispositifs immobiliseurs de type électronique, tels que des dispositifs d'inhibition du calculateur d'injection, il est apparu intéressant de faire jouer à la clé un rôle dans la chaîne de déverrouillage de ces immobiliseurs électroniques lors d'une phase de démarrage du véhicule. Il est en effet particulièrement avantageux d'ajouter au dispositif électronique logé dans la tête de clé, destiné en premier lieu à remplir la fonction de télécommande, des moyens électroniques d'identification de l'utilisateur, de manière à autoriser ou interdire le démarrage du véhicule.

La clé remplit alors une deuxième fonction électronique qui est une fonction d'identification pour le déverrouillage des immobiliseurs électroniques d'antivol. Par le terme « identification », il faut comprendre qu'un échange de données de type interrogation/réponse s'instaure entre la clé et une centrale d'antivol pour parvenir une reconnaissance mutuelle.

Cette évolution des différentes fonctions dévolues à la clé de contact du véhicule est par exemple évoquée dans l'article « La carte à puce multiapplication arrive... pour la voiture », Electronique International Hebdo N°162, 8 décembre 1994.

Ainsi qu'il ressort de cet article, la double fonction de télécommande pour l'accès au véhicule et d'identification pour le déverrouillage des immobiliseurs électroniques d'antivol donnée à la clé est à l'origine des dispositifs à transpondeur logé dans la tête de clé.

En effet, le recours à un transpondeur apparaît aujourd'hui comme une solution susceptible de remplir les impératifs liés au contexte automobile, en termes de sécurité et de confort d'utilisation.

Ces impératifs sont de deux natures.

D'une part, il est nécessaire que la procédure d'identification électronique pour le déverrouillage des immobiliseurs d'antivol se produise d'une manière totalement passive et transparente pour l'utilisateur. En effet, s'il est admis que l'utilisateur doit commander l'ouverture des portières d'une manière active, c'est à dire ainsi qu'il a été dit en appuyant sur une touche 14 de la tête de clé 13 utilisée comme boîtier de télécommande, il n'est au contraire pas souhaitable d'exiger de lui qu'il intervienne encore dans la procédure d'identification pour le déverrouillage des immobiliseurs électroniques d'antivol autrement qu'en effectuant le geste familier consistant à tourner la clé dans l'interrupteur d'antivol.

D'autre part, il est nécessaire que la procédure d'identification électronique pour le déverrouillage des immobiliseurs d'antivol ne soit pas paralysée par le fait que les moyens d'alimentation autonome du dispositif électronique de la tête de clé sont déchargés. En effet, ainsi qu'il a déjà été dit, si la pile constituant ces moyens d'alimentation autonomes est déchargée, la clé n'est plus utilisable pour remplir sa fonction de télécommande mais, selon un mode dégradé, il reste possible d'ouvrir les portières en utilisant la clé en tant qu'organe mécanique coopérant avec les serrures de portières. Par contre, si la pile est déchargée de sorte que le dispositif électronique de la tête de clé n'est plus alimenté, la procédure d'identification électronique pour le déverrouillage des immobiliseurs d'antivol ne peut plus être réalisée, sauf bien sûr à prévoir des moyens supplémentaires tels qu'un clavier destiné à l'insertion d'un code d'identification en mode dégradé, ce qui n'est pas envisageable pour en vertu des impératifs de coût et de confort évoqués ci-dessus.

On comprend que ces impératifs ont conduit jusqu'ici les équipementiers à proposer des solutions basées sur l'utilisation d'un dispositif à transpondeur. En effet, comme il est illustré à la figure 2b, de tels dispositifs comportent une centrale d'antivol 20 comprenant un module d'interrogation situé dans le véhicule qui « interroge » de manière passive un transpondeur 23 situé dans la tête de clé 11 lorsque celle-ci est en place dans l'interrupteur d'antivol 25 et que le rotor est tourné dans une position angulaire déterminée, le circuit électronique de la tête de clé qui comprend le transpondeur 23 étant télé-alimenté et interrogé lors de la procédure d'identification par couplage magnétique à l'aide d'une bobine 24 disposée autour du cylindre de l'interrupteur d'antivol 25. Ainsi le circuit électronique de la tête de clé est alimenté par la source d'alimentation principale du véhicule (la batterie) et non pas par ses moyens d'alimentation autonomes.

Un exemple de tel dispositif à transpondeur télé-alimenté est donné dans le document EP 640 734 dans lequel un échange de données et/ou d'énergie est réalisé entre une bobine disposée autour du cylindre de serrure et un transpondeur disposé dans la tête de clé.

Cependant, le transpondeur présente l'inconvénient d'être un composant cher et qui nécessite de plus des moyens de mise en oeuvre spécifiques tels que la bobine 24 précitée.

Par ailleurs, il est déjà connu par exemple de par le document US 4,868,409, de réaliser un contact entre la clé et la serrure de manière permettre l'alimentation des circuits électroniques de la tête de clé, et éventuellement la charge d'une source d'alimentation rechargeable qu'il contiennent, en les connectant directement à la tension de la batterie du véhicule.

De même, le document WO 93/02897 divulgue un système dans lequel une liaison électrique physique, s'établissant par l'intermédiaire de contacts existe entre la clé et la serrure, sur laquelle un message de déverrouillage est émis depuis la clé vers la serrure.

des systèmes de sécurité selon les documents précités sont cependant imparfaits, en ce qu'ils ne permettent pas de réaliser la fonction d'identification pour le déverrouillage des immobiliseurs électroniques d'antivol. En effet, les circuits électroniques de la tête de clé sont exactement les mêmes que ceux dévolus à la fonction de télécommande, et émettent un signal de déverrouillage des immobiliseurs lorsque la présence de la clé dans la serrure est détectée. De tels systèmes ne permettent donc pas de remplir la fonction d'identification actuellement dévolue au transpondeur.

Afin de porter remède à ces inconvénients de l'état de la technique, la présente invention propose un système de sécurité à clé et serrure, notamment pour véhicule automobile, comprenant :
- une clé comportant des moyens pour réaliser une fonction de déverrouillage des antivols mécaniques du véhicule et des moyens pour réaliser une fonction de télécommande pour l'ouverture à distance des ouvrants du véhicule,
- une centrale d'antivol intercalée entre ladite serrure et des moyens d'immobilisation électronique du véhicule tel qu'un dispositif d'inhibition du calculateur d'injection ;
- un circuit électronique logé dans la tête de clé ;
- une liaison électrique physique entre ledit circuit électronique logé dans la tête de clé et la centrale d'antivol, qui est fermée lorsque la clé est présente dans la serrure et que le rotor de ladite serrure est dans une position angulaire prédéterminée ;
- des moyens pour réaliser une transmission bidirectionnelle de données et/ou d'énergie par l'intermédiaire de ladite liaison électrique physique,
de manière à ce que la clé remplisse également une fonction d'identification électronique pour le déverrouillage des moyens d'immobilisation électronique du véhicule.

Par le terme « bidirectionnelle » utilisé pour qualifier la transmission, il faut comprendre que les données et/ou l'énergie sont transmises aussi bien dans le sens clé vers serrure que dans le sens serrure vers clé. Ainsi, il est possible d'instaurer un dialogue du type interrogation/réponse entre la serrure et la centrale, et donc de réaliser la procédure d'identification de la clé de manière totalement passive et transparente pour l'utilisateur.

Par ailleurs, on comprend que l'échange d'énergie est destiné à assurer, au moins pendant la procédure d'identification de la clé, l'alimentation des circuits électroniques de celle-ci, de sortes que l'identification et donc le démarrage du véhicule sont possibles même lorsque les moyens d'alimentation autonome de la clé sont déchargés.

Ainsi, la combinaison des moyens énumérés ci-dessus selon l'invention permet d'obtenir un système de sécurité dans lequel la clé remplit simultanément les trois fonctions de déverrouillage mécanique de l'antivol de direction, de télécommande lors d'une phase d'accès au véhicule, et d'identification lors d'une phase de démarrage.

L'invention concerne aussi un procédé d'identification pour la mise en oeuvre d'un tel système de sécurité, qui est mis en oeuvre par un microcontrôleur de la centrale d'antivol et par un microcontrôleur de la clé, ledit microcontrôleur de la centrale d'antivol émettant un message d'interrogation sur la liaison électrique physique à destination du microcontrôleur de la clé, celui-ci répondant par l'émission d'un message de réponse sur ladite liaison électrique physique à destination du microcontrôleur de la centrale d'antivol.

Le système de sécurité selon l'invention présente donc tous les avantages d'un dispositif à transpondeur sans pour autant faire appel à un tel composant, et est de nature à satisfaire toutes les exigences définies dans le préambule.

D'autres caractéristiques et avantages de la présente invention apparaîtront à la lecture de la description qui va suivre, en référence aux dessins annexés qui sont :
- à la figure 1, déjà décrite : un schéma d'un dispositif d'ouverture à distance des ouvrants d'un véhicule illustrant la fonction de télécommande remplie par la clé ;
- aux figures 2a et 2b , également déjà décrites : un schéma d'un dispositif antivol de véhicule mettant en évidence la double fonction mécanique et électronique de déverrouillage des immobiliseurs qui est remplie par la clé ;
- à la figure 3 : un schéma d'une clé en position dans un interrupteur d'antivol illustrant le principe de la liaison bidirectionnelle entre ces deux organes selon l' invention ;
- à la figure 4 : un schéma d'un circuit électrique de gestion du transfert bidirectionnel de données et d'énergie entre la clé et la centrale d'antivol ;
- à la figure 5 : un schéma d'un protocole d'échange de données entre la clé et la centrale d'antivol illustrant le principe de réalisation de la fonction d'identification électronique selon l'invention.

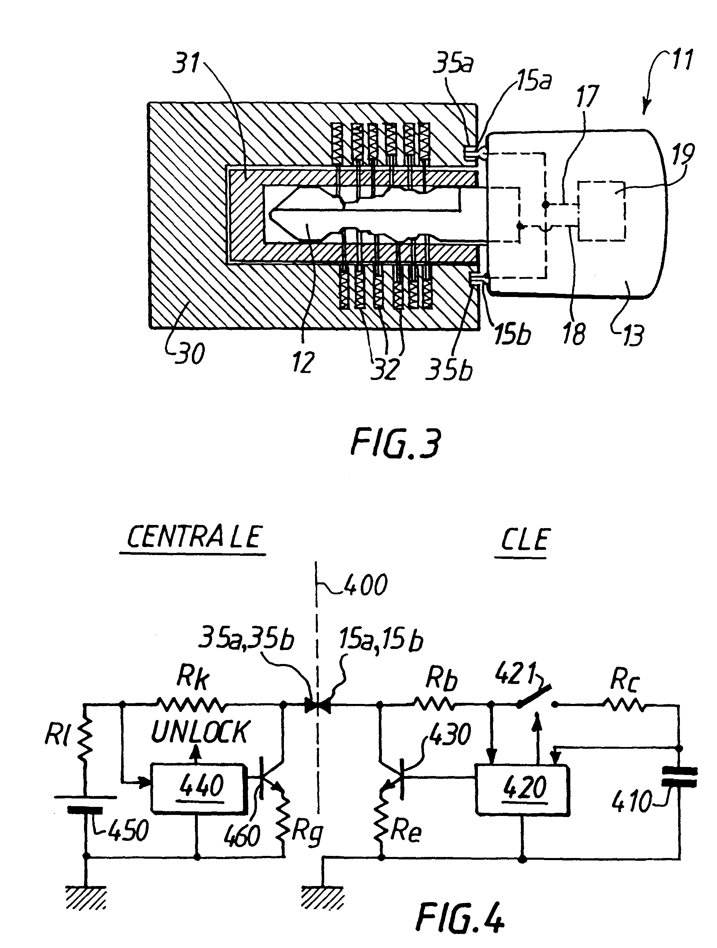

A la figure 3, on a représenté une vue partielle en coupe d'un système de sécurité selon l'invention montrant une clé 11 en position dans le cylindre de la serrure de l'interrupteur d'antivol 25. Cette serrure comprend classiquement un stator 30 et un rotor 31. Des paillettes 32 sont adaptées pour coopérer avec des dentures portées par l'insert de clé 12 lorsque celle-ci est insérée dans la serrure, pour libérer le rotor en cas de concordance.

Ces moyens connus en eux mêmes permettent à la clé de remplir sa fonction mécanique de déverrouillage de l'antivol de direction ainsi qu'il a été dit en regard de la figure 2a.

Dans la tête de clé 13 est logé un circuit électronique 19 dont le rôle et les détails de réalisation relativement au principe de l'invention seront explicités ci-dessous en regard de la figure 4. Ce circuit électronique 19 comprend notamment un accumulateur rechargeable qui constitue la source d'alimentation autonome des moyens électroniques destinés à permettre à la clé de remplir sa fonction de télécommande dans le cadre de la procédure d'accès au véhicule. Ces moyens électroniques comprennent notamment des moyens émetteurs non représentés, tels qu'une diode infrarouge ou une antenne radiofréquence (RF) pour l'émission du signal 16 de déverrouillage des ouvrants du véhicule ainsi qu'il a été vu en préambule en regard de la figure 1.

Des moyens spécifiques de la clé 11 selon l'invention sont constitués par des bornes de contact 15a,15b portées par le boîtier de la tête de clé 13, sensiblement à la périphérie de l'insert de clé 12. Ces bornes de contact 15a,15b sont destinées à coopérer avec des bornes équivalentes 35a,35b portées par le stator 30 de la serrure.

Les bornes 15a,15b portées par le boîtier de la tête de clé sont électriquement reliées l'une à l'autre à l'intérieur du boîtier. De même les bornes 35a,35b portées par le stator, sont électriquement reliées l'une à l'autre. La clé ayant classiquement la forme d'une clé plate, ces précautions sont destinées à permettre l'insertion de la clé dans la fente de la serrure dans les deux sens possibles.

Les bornes 35a,35b portées par le stator sont électriquement isolées de celui-ci. En effet, la serrure est reliée à la masse électrique du véhicule, de sorte que l'insert de clé 12 se trouve également à la masse lorsque la clé est présente dans le rotor. Ainsi qu'on l'aura compris, une liaison électrique physique existe alors entre la clé et la serrure, cette liaison électrique étant réalisée d'une part par les paires de bornes de contact 15a,15b et 35a,35b et, d'autre part par un retour à la masse se faisant par l'insert de clé 12 et le corps de la serrure. Le circuit électronique 19 est connecté à une première extrémité de cette liaison électrique physique par l'intermédiaire respectivement d'un premier fil 17 et d'un second fil 18.

Une centrale d'antivol, non représentée, est connectée à une seconde extrémité de cette liaison électrique physique. Cette centrale d'antivol constitue, avec la liaison électrique physique et des moyens du circuit électronique 19, les moyens essentiels du dispositif de sécurité selon l'invention, lui permettant de remplir la fonction d'identification pour le déverrouillage des immobiliseurs électroniques d'antivol.

Il est important de noter que la forme et la disposition des moyens représentés à la figure 3, notamment celles des bornes de contact assurant l'établissement de la liaison électrique physique entre la serrure et la clé, ne constituent qu'un exemple de réalisation et ne doivent en aucun cas être interprétées comme pouvant limiter la portée de la présente invention.

Dans un mode de réalisation préféré de l'invention, les mêmes bornes de contact assurent simultanément l'alimentation électrique du circuit électronique 19 logé dans la tête de clé 13, et la transmission bidirectionnelle des données, c'est à dire dans le sens circuit électronique 19 vers la centrale d'antivol et inversement.

D'autres modes de réalisation sont possibles dans lesquels des premières bornes de contact sont dédiées à l'alimentation électrique du circuit électronique 19 logé dans la tête de clé 13, et des secondes bornes de contact sont dédiées à la transmission bidirectionnelle des données.

Nous allons maintenant considérer la figure 4 pour expliciter la nature des moyens du dispositif de sécurité selon l'invention, lui permettant de remplir la fonction d'identification pour le déverrouillage des immobiliseurs électroniques d'antivol.

A la figure 4, on a représenté les bornes de contact 35a,35b d'une part et 15a,15b d'autre part ainsi séparées par un trait discontinu 400 symbolisant la séparation entre les moyens du dispositif de sécurité selon l'invention situés coté centrale d'antivol, c'est à dire sur la partie gauche de la figure, et ceux situés côté clé c'est à dire sur la partie droite de la figure.

Les connections à la masse électrique du circuit sont représentées schématiquement par le symbole usuel de la masse.

Du côté de la centrale d'antivol, un microcontrôleur 440 est connecté par une première entrée à la borne positive de la batterie 450 dont il tire son alimentation et est aussi connecté à la masse.

La borne positive de la batterie 450 est aussi reliée à la borne de contact 35a,35b par l'intermédiaire d'une première résistance R1 et d'une seconde résistance Rk.

Une seconde entrée du microcontrôleur 440 est reliée au point milieu entre les résistances R1 et Rk. Cette seconde entrée comporte un convertisseur analogique/numérique intégré et est destinée à lire les données transmises sur la liaison électrique physique.

Une première sortie du microcontrôleur 440 est reliée à la base d'un transistor 460 dont l'émetteur est relié à la masse par l'intermédiaire d'une résistance Rg et dont le collecteur est relié à la borne de contact 35a,35b.

Du côté de la clé, un microcontrôleur 420 est connecté par une première entrée à une première armature d'un condensateur 410 dont la seconde armature est reliée à la masse.

La première armature du condensateur 410 est également reliée à la borne de contact 15a,15b par l'intermédiaire d'une première résistance Rc, d'un interrupteur commandé 421, et d'une seconde résistance Rb.

Une première sortie du microcontrôleur 420 est reliée à la base d'un transistor 430 dont l'émetteur est relié à la masse par l'intermédiaire d'une résistance Re et dont le collecteur est relié à la borne de contact 15a,15b.

Le microcontrôleur 420 est relié par une seconde entrée à la borne de contact 15a,15b au point milieu entre la résistance Rb et l'interrupteur commandé 421.

L'état ouvert ou fermé de l'interrupteur commandé 421 est contrôlé par un signal de commande délivré par une seconde sortie du microcontrôleur 420.

Lors d'une phase d'accès au véhicule, c'est à dire lorsque la clé est utilisée pour réaliser sa fonction de télécommande pour le déverrouillage des ouvrants du véhicule, le microcontrôleur 420 est alimenté par le condensateur 410, celui-ci agissant en fait comme un accumulateur d'énergie pour l'alimentation autonome des circuits électroniques de la tête de clé. Cet accumulateur d'énergie nécessite bien sûr d'être rechargé lorsque la tension qu'il délivre devient trop faible pour alimenter lesdits circuits électroniques.

Cette fonctionnalité est possible grâce au dispositif selon l'invention, tel que représenté à la figure 4, dont Le fonctionnement va maintenant être décrit.

Lorsque la clé est présente dans la serrure et que le rotor est libéré en rotation par concordance des dentures de ladite clé avec les moyens de codage mécanique de ladite serrure, le rotor est amené dans une position angulaire déterminée de telle sorte que le contact électrique soit établi entre les bornes de contact 15a,15b de la clé et les bornes de contact 35a,35b de la serrure. La liaison électrique physique entre la clé et la serrure est donc fermée.

Notons que dans ces conditions, la masse électrique est commune aux circuits électroniques des deux cotés de la liaison électrique physique.

Dès lors, le microcontrôleur 420 est alimenté par la tension de la batterie 450 du véhicule à travers la résistance R1, les bornes de contact 15a,15b et 35a,35b et à travers la résistance Rb. Cette tension est reçue sur la seconde entrée précitée du microcontrôleur. Il est possible d'insérer un dispositif de régulation (non représenté) de manière à alimenter le microcontrôleur 420 sous une tension déterminée constante (par exemple 5 volts).

Lorsque le niveau de la tension mesurée aux bornes du condensateur 410 par le microcontrôleur 420 sur sa première entrée est au dessous d'un premier seuil prédéterminé, ledit microcontrôleur 420 génère sur sa seconde sortie un signal de commande de fermeture de l'interrupteur 421.

Le condensateur 410 est alors rechargé par la tension de la batterie 450 du véhicule à travers les résistances Rl, Rb et RC.

Lorsque le niveau de la tension mesurée aux bornes du condensateur 410 par le microcontrôleur 420 sur sa première entrée passe au dessus d'un second seuil prédéterminé, ledit microcontrôleur 420 génère sur sa seconde sortie un signal de commande de l'interrupteur 421. En effet, le condensateur est capable de supporter des tensions allant jusqu'à 5 ou 6 volts, mais pas au-dessus de 6 volts sans risquer d'être endommagé.

La diode 415 sert à permettre l'alimentation du microcontrôleur 420 sur sa seconde entrée à partir de la tension délivrée par l'accumulateur 410 lors de la procédure d'accès c'est à dire lorsque la clé est utilisée dans sa fonction de télécommande, sans toutefois court-circuiter la branche contenant l'interrupteur 421 et la résistance Rc lors de la procédure d'identification, c'est à dire lorsque la clé est présente dans la serrure d'antivol.

Nous avons décrit les moyens d'échange d'énergie du système de sécurité selon l'invention, qui permettent d'assurer la fonction d'identification lorsque la source 410 d'alimentation autonome de la clé est déchargée, et qui permettent aussi éventuellement de recharger cette source d'alimentation. Le système de sécurité selon l'invention comporte donc les moyens nécessaires pour rempli sa fonction d'identification en mode dégradé, c'est à dire quelque soit l'état chargé ou déchargé de la source d'alimentation autonome de la clé, ainsi qu'il avait été spécifié comme objectif de l'invention en préambule de la présente description.

C'est un avantage de l'invention que de plus avoir besoin d'ouvrir le boîtier formant tête de clé pour remplacer la pile utilisée comme source d'alimentation autonome des moyens électroniques servant à remplir la fonction de télécommande, puisque celle-ci est remplacée par un accumulateur rechargeable qui est rechargé ainsi qu'il vient d'être dit.

En conséquence, le boîtier formant tête de clé peut être fermé d'une manière étanche, ce qui procure l'avantage supplémentaire d'assurer une protection absolue contre l'humidité des circuits électroniques qu'il contient.

Nous allons maintenant décrire le détail de la phase d'identification, en précisant tout d'abord en regard de la figure 4 quels sont les moyens du système de sécurité selon l'invention qui sont destinés à l'échange bidirectionnel de données entre la centrale d'antivol située côté serrure d'une part, et la clé d'autre part.

Ces moyens sont constitués côté serrure par le transistor 460 et côté clé par le transistor 430. Nous allons décrire le fonctionnement de l'échange de données dans le sens serrure vers clé uniquement sachant qu'il est identique dans le sens clé vers serrure.

Un message se présentant sous la forme d'un train de bits codés en tension est généré sur la première sortie du microcontrôleur 440 de la centrale d'antivol et doit être émis vers le microcontrôleur 420 de la clé. Ce train de bits est appliqué sur la base du transistor 460 qui va ainsi moduler la quantité de courant prélevée par son collecteur sur la ligne électrique venant de la batterie et reliée à la borne de contact 35a,35b.

Cette modulation de courant se traduit par une modulation de tension aux bornes de la résistance Rb, ladite modulation de tension étant détectée par le microcontrôleur 420 sur sa seconde entrée. Le microcontrôleur possède en effet des moyens pour distinguer les variations de niveau de tension sur sa seconde entrée et pour en déduire les données transmises sur la ligne. Ces moyens sont constitués par un convertisseur analogique/numérique présent en interne sur l'entrée du microcontrôleur et par un logiciel de traitement numérique des données ainsi acquises.

Ainsi qu'il a été dit, l'échange de données dans le sens clé vers serrure se produit de manière symétrique à l'aide du transistor 430 côté clé, et de la résistance Rl ainsi que de l'entrée du microcontrôleur 440 côté serrure.

Les collisions entre les données transférées dans un sens et celles transférées dans l'autre sens sont évitées par une gestion des instants d'émission et des durées d'émission de part et d'autre (quand le microcontrôleur 440 de la centrale d'antivol émet, le microcontrôleur 420 de la clé reste muet et réciproquement) . Un protocole de transmission assurant cette gestion des communications est à la portée de l'homme du métier et n'appelle pas de remarques particulières.

Ainsi, les moyens du système de sécurité selon l'invention tels que décrits ci-dessus en regard de la figure 4 permettent-ils l'échange bidirectionnel de données et aussi l'échange d'énergie entre la clé et la serrure par l'intermédiaire d'une ligne électrique physique.

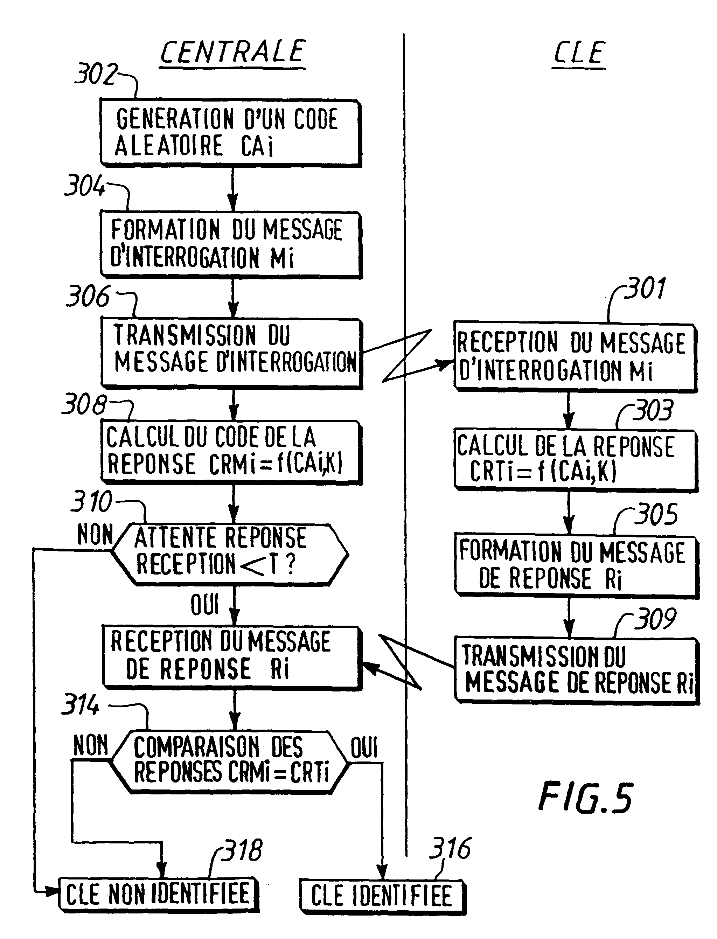

Il nous reste maintenant à décrire la nature des données échangées pour comprendre comment est réalisée la procédure d'identification proprement dite, ce que nous allons faire ci-dessous en considérant le schéma bloc de la figure 5.

Sur cette figure, on a représenté les différentes étapes de la procédure d'identification de la clé en séparant, du côté gauche de la figure, celles réalisées par les moyens de la centrale d'antivol et, du côté droit, celles réalisées par les moyens électroniques de la clé.

Cette procédure d'identification est réalisée sous la forme d'un procédé qui débute lorsque la clé est présente dans la serrure est que le rotor de la serrure est tourné dans la position déterminée précédemment évoquée, et telle que les bornes de contact de la serrure et de la clé soit en contact électrique.

Le procédé d'identification débute par une étape 302 destinée à la génération par la centrale d'antivol d'un code aléatoire ou pseudo-aléatoire CAi. Ce code est généré selon toute méthode connue de l'homme du métier, comme par exemple à l'aide d'un registre à décalage bouclé sur un opérateur OU Exclusif.

Dans une étape 304, la centrale forme ensuite un message d'interrogation Mi qui comporte notamment le code aléatoire CAi ainsi que des bits de contrôle destinés à imposer un format spécifique au message Mi afin de faciliter son acquisition et son exploitation par les moyens électroniques de la tête de clé. Ces bits peuvent par exemple contenir des informations de début de trame, de fin de trame, de parité, de CRC, de correction d'erreur, etc...

Ce message d'interrogation se présente physiquement sous la forme du train de bits évoqué lors de la description de la figure 4, et est délivré sur la première sortie du microcontrôleur 440 ainsi qu'il a été dit.

Lors d'une étape 306 de transmission, le message d'interrogation Mi est émis sur la liaison électrique physique reliant le microcontrôleur de la centrale d'antivol au microcontrôleur de la tête de clé ainsi qu'il a été expliqué ci-dessus en regard de la figure 4.

Le message d'interrogation Mi est alors reçu par ledit microcontrôleur de la tête de clé, ce qui constitue une étape 301.

Après avoir reçu le message d'interrogation Mi, le microcontrôleur de la tête de clé en extrait le code aléatoire CAi et opère le calcul 303 de la réponse en procédant à la génération d'un code, dit code réponse CRTi, à l'aide d'une fonction de cryptage déterminée f qui, en outre, utilise au moins une clé de cryptage K. Le code de réponse CRTi est ainsi défini par la relation CRTi=f(CAi,K).

Parallèlement, après avoir émis le message d'interrogation Mi, le microcontrôleur de la centrale d'antivol opère le calcul 308 de la réponse qu'il doit recevoir pour réaliser l'identification, en procédant à la génération d'un code, dit code de réponse attendu CRMi, à l'aide de la même fonction de cryptage déterminée f que celle utilisée par le microcontrôleur de la tête de clé et qui, en outre, utilise la même clé de cryptage K que ledit microcontrôleur. Le code CRMi est ainsi défini par la relation CRMi=f(CAi,K).

La clé de cryptage K constitue une donnée propre au couple centrale d'antivol/clé et est enregistrée dans les deux microcontrôleurs lors d'une phase d'appairage en usine.

La fonction f est aussi une donnée propre au couple centrale d'antivol/clé. Elle est implémentée dans des mémoires des deux microcontrôleurs.

La fonction de cryptage f peut être considérée comme une fonction de la variable CAi et dont la clé de cryptage K est un paramètre, dont les propriétés sont les suivantes :
- elle est injective, c'est à dire qu'à une valeur CAi donnée, ne correspond qu'une seule valeur CRTi (respectivement CRMi) ;
- elle n'est pas inversible, c'est à dire qu'il n'existe pas de fonction analytique g telle que g(CRTi,K)=CAi (respectivement g(CRMi,K)=CAi) ;
- elle fait appel à des opérations logiques élémentaires telles que le OU Exclusif, le décalage binaire, l'addition binaire, le test des valeurs des éléments binaires, etc... Ces opérations étant facilement exécutables par un microcontrôleur de faible puissance de calcul ou par un circuit intégré spécifique.

Après avoir calculé le code de réponse CRTi, le microcontrôleur de la tête de clé enchaîne sur une étape 305 de formation d'un message de réponse Ri, similaire à l'étape 304 de formation du message de l'interrogation décrite précédemment. Dans le même temps, le microcontrôleur de la centrale d'antivol reste en attente de la réponse du microcontrôleur de la tête de clé, ce que l'on a représenté à la figure 5 par une étape 310 d'attente de la réponse. Pour être valide, cette réponse doit intervenir dans un intervalle de temps T déterminé après la fin de l'étape 306 de transmission du message d'interrogation Mi.

Si le message de réponse Ri n'est pas reçu par le microcontrôleur de la centrale d'antivol dans cet intervalle de temps T déterminé, le microcontrôleur de la centrale d'antivol conclut à la non identification de la clé, ce qui constitue une fin possible 318 du procédé d'identification.

Lorsque le microcontrôleur de la tête de clé émet, dans ledit intervalle du temps T déterminé, le message de réponse Ri lors d'une étape 309, et que lorsque le microcontrôleur de la tête de la centrale d'antivol le reçoit dans cet intervalle de temps lors d'une étape 312, le microcontrôleur de la centrale d'antivol extrait le code de réponse CRTi du message de réponse Ri reçu, et le compare au code de réponse attendu CRMi lors d'une étape 314.
- si le code de réponse CRTi et le code de réponse attendu CRMi sont égaux, et compte tenu de la propriété d'injectivité de la fonction f, le microcontrôleur de la centrale d'antivol conclut à l'identification de la clé ce qui constitue une fin possible 316 pour le procédé d'identification ;
- dans le cas contraire, c'est-à-dire si le code de réponse CRTi est différent du code attendu CRMi, le microcontrôleur de la centrale d'antivol conclut à la non identification de la clé, ce qui constitue l'autre fin possible 318 du procédé d'identification.

En cas d'identification, le microcontrôleur 440 de la centrale d'antivol génère sur une seconde sortie un signal UNLOCK destiné à déverrouiller les organes d'immobilisation électronique du véhicule, tel qu'un dispositif d'inhibition du calculateur d'injection par exemple.

Par ailleurs, en cas d'identification, il est possible de commander le réglage de la position des rétroviseurs ou de l'inclinaison des sièges en fonction de caractéristiques pré-enregistrées, qui sont attachées au porteur de la clé identifiée. A cet effet, le message de réponse émis par le microcontrôleur 420 de la clé pourra contenir un code d'identification du porteur de la clé. De plus, le microcontrôleur 440 pourra comporter autant de sortie supplémentaires que d'organes à commander.

On voit aussi que le procédé d'identification décrit ci-dessus est réalisé selon un schéma interrogation/réponse, ce qui est le schéma classique de l'identification par transpondeur selon l'art antérieur, sans qu'un tel transpondeur soit utilisé selon l'invention. Le système de sécurité selon l'invention présente donc tous les avantages procurés par les transpondeurs sans atteindre le coût ni la complexité des systèmes de l'art antérieur.

On voit aussi que ce procédé d'identification de l'invention ne nécessite qu'une étape d'interrogation et qu'une étape de réponse de la clé, ce qui porte au minimum le nombre des échanges de données requis pour remplir la fonction d'identification dévolue à la clé.

## Revendications

1. Système de sécurité à clé et serrure, notamment pour véhicule automobile, caractérisé en ce qu'il comprend :
- une clé comportant des moyens pour réaliser une fonction de déverrouillage des antivols mécaniques du véhicule et des moyens pour réaliser une fonction de télécommande pour l'ouverture à distance des ouvrants du véhicule,
- une centrale d'antivol intercalée entre ladite serrure et des moyens d'immobilisation électronique du véhicule tel qu'un dispositif d'inhibition du calculateur d'injection ;
- un circuit électronique (19) logé dans la tête de clé (13) ;
- une liaison électrique physique entre ledit circuit électronique (19) logé dans la tête de clé (13) et la centrale d'antivol, qui est fermée lorsque la clé (11) est présente dans la serrure et que le rotor (31) de ladite serrure est dans une position angulaire prédéterminée ;
- des moyens pour réaliser une transmission bidirectionnelle de données et/ou d'énergie par l'intermédiaire de ladite liaison électrique physique,
de manière à ce que la clé remplisse également une fonction d'identification électronique pour le déverrouillage des moyens d'immobilisation électronique du véhicule.

2. Système selon la revendication 1, caractérisé en ce que la liaison électrique physique comprend au moins une borne de contact (15a,15b) portée par la clé (11) coopérant avec au moins une borne de contact (35a,35b) portée par le stator (30) de la serrure ces deux bornes étant en contact électrique lorsque la clé est présente dans la serrure et que le rotor (31) est dans ladite position angulaire prédéterminée, de manière à fermer la liaison électrique physique.

3. Système selon la revendication 2, caractérisé en ce que la liaison électrique physique comprend en outre un retour à la masse par l'insert de clé (12) et le corps de la serrure (30,31,32).

4. Système selon la revendication 2 ou la revendication 3, caractérisé en ce que les mêmes bornes de contact assurent simultanément l'alimentation électrique du circuit électronique (19) logé dans la tête de clé (13), et la transmission bidirectionnelle des données.

5. Système selon la revendication 1, caractérisé en ce qu'un accumulateur rechargeable (410) est logé dans la tête de clé (13) pour l'alimentation autonome des moyens réalisant la fonction de télécommande pour l'ouverture à distance des ouvrants du véhicule, et en ce que cet accumulateur (410) est rechargé par l'énergie transmise depuis la batterie (450) du véhicule vers la clé (11) par l'intermédiaire de la liaison électrique physique.

6. Système selon la revendication 1, caractérisé en ce que le circuit électronique (19) logé dans la tête de clé (13) d'une part et la centrale d'antivol d'autre part, comportent des moyens pour émettre et recevoir les données sous forme d'une tension continue modulée en amplitude.

7. Système selon l'une des revendications précédentes, caractérisé en ce la tête de clé (13) est constituée par un boîtier fermé d'une manière étanche.

8. Système selon l'une des revendications précédentes, caractérisé en ce que la clé comporte des moyens pour réaliser des fonctions de verrouillage et de déverrouillage mécanique des ouvrants du véhicule.

9. Système selon la revendication 8, caractérisé en ce que les moyens de la clé pour réaliser des fonctions de verrouillage et de déverrouillage mécanique des ouvrants du véhicule et les moyens de la clé pour réaliser une fonction de déverrouillage des antivols mécaniques du véhicule sont les mêmes.

10. Procédé d'identification pour la mise en oeuvre d'une système de sécurité selon l'une des revendications précédentes caractérisé en ce qu'il est mis en oeuvre par un microcontrôleur (440) de la centrale d'antivol et par un microcontrôleur (420) de la clé, ledit microcontrôleur (440) de la centrale d'antivol émettant un message d'interrogation (Mi) sur la liaison électrique physique à destination du microcontrôleur (420) de la clé, celui-ci répondant par l'émission d'un message de réponse (Ri) sur ladite liaison électrique physique à destination du microcontrôleur (440) de la centrale d'antivol.

11. Procédé selon la revendication 10, caractérisé en ce qu'il comprend les étapes suivantes :
a) génération (302) d'un code aléatoire CAi par le microcontrôleur de la centrale d'antivol ;
b) formation (304) d'un message d'interrogation (Mi) à partir du code aléatoire (CAi) par le microcontrôleur de la centrale d'antivol ;
c) réception (301) du message d'interrogation (Mi) par le microcontrôleur de la clé ;
d) calcul (303) d'un code de réponse (CRTi) par le microcontrôleur de la clé ;
e) formation (305) d'un message de réponse (Ri) à partir du code de réponse (CRTi), par le microcontrôleur de la clé ;
f) calcul (308) d'un code de réponse attendu (CRMi) par le microcontrôleur de la centrale d'antivol ;
g) transmission (309) du message de réponse (Ri) par le microcontrôleur de la clé dans un intervalle de temps (T) déterminé ;
h) si le message de réponse (Ri) n'est pas reçu par le microcontrôleur de la centrale d'antivol dans ledit intervalle de temps déterminé (T), non identification (318) de la clé, sinon :
i) réception (312) du message de réponse (Ri) par le microcontrôleur de la centrale d'antivol dans ledit intervalle de temps déterminé (T) ;
j) comparaison (314) par le microcontrôleur de la centrale d'antivol, entre le code de réponse (CRTi) extrait du message de réponse (Ri) reçu et le code de réponse attendu (CRmi) ;
k) en cas d'égalité à la comparaison de l'étape i), identification (316) de la clé ;
l) en cas contraire, non identification (318) de la clé.

12. Procédé selon la revendication 11, caractérisé en ce que, en cas d'identification de la clé, il comporte une étape supplémentaire de réglage de la position des rétroviseurs et/ou de l'inclinaison des sièges en fonction de caractéristiques préenregistrées, qui sont attachées au porteur de la clé identifiée.
